(19) Europäisches Patentamt
European Patent Office
Office européen des brevets

(11) Numéro de publication : **0 403 525 B1**

(12) # FASCICULE DE BREVET EUROPEEN

(45) Date de publication du fascicule du brevet : **02.01.92 Bulletin 92/01**

(51) Int. Cl.⁵ : **B32B 27/36,** G03C 1/795, G03C 1/93, G03C 1/95, C08G 63/68

(21) Numéro de dépôt : **89903174.4**

(22) Date de dépôt : **03.03.89**

(86) Numéro de dépôt international : **PCT/FR89/00086**

(87) Numéro de publication internationale : **WO 89/08558 21.09.89 Gazette 89/23**

(54) **FILMS POLYESTER COMPOSITES A ADHERENCE AMELIOREE ET LEUR PROCEDE D'OBTENTION.**

(30) Priorité : **09.03.88 FR 8803302**

(43) Date de publication de la demande : **27.12.90 Bulletin 90/52**

(45) Mention de la délivrance du brevet : **02.01.92 Bulletin 92/01**

(84) Etats contractants désignés : **BE DE FR GB IT LU NL**

(56) Documents cités :
**EP-A- 0 129 674**
**EP-A- 0 172 269**
**FR-A- 2 608 506**
**Patent Abstracts of Japan, vol. 4, no. 19 (C-73) 16 février 1980, page 1C 73, & JP, A, 54153883**

(73) Titulaire : **RHONE-POULENC FILMS**
**25, quai Paul Doumer**
**F-92408 Courbevoie (FR)**

(72) Inventeur : **FLEURY, Etienne**
**135 bis, rue de Montagny**
**F-69008 Lyon (FR)**
Inventeur : **VOVELLE, Louis**
**85, Grande-Rue de la-Croix-Rousse**
**F-69004 Lyon (FR)**
Inventeur : **ASSANTE, Jean-Pierre**
**15, rue Galilée**
**F-69100 Villeurbanne (FR)**
Inventeur : **CORSI, Philippe**
**La Duchère 336 C Balmont-Ouest**
**F-69009 Lyon (FR)**

(74) Mandataire : **Rioufrays, Roger et al**
**RHONE-POULENC CHIMIE Service Brevets**
**Chimie Centre de Recherches des Carrières**
**B.P. 62**
**F-69192 Saint-Fons Cédex (FR)**

**EP 0 403 525 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention a pour objet des films polyester composites orientés présentant, notamment, une adhérence améliorée vis-à-vis de revêtements finals d'application variés et leur procédé d'obtention.

Par l'expression "revêtements finals d'application" on désigne, au sens de la présente invention, les revêtements qui confèrent aux films polyester orientés des propriétés rendant possible des applications industrielles extrêmement diverses, bien connues du spécialiste. On sait que pour nombre d'applications industrielles, les films polyester ne peuvent être utilisés directement mais seulement après dépôt d'un revêtement adapté à chaque type d'application ; on peut citer à titre d'exemple, des revêtements de matage destinés au dessin manuel ou aux tables traçantes ; les revêtements photosensibles pour les applications photographiques ; les revêtements diazoïques pour les applications microfilms, tirage de plans ou reprographie ; les revêtements d'impression ; les revêtements magnétiques pour la saisie d'informations diverses (sons, images, données informatiques) ; les revêtements métalliques ; les revêtements modifiant les propriétés de perméabilité aux gaz des films polyester utilisés comme emballages (revêtements de polyéthylène, d'alcool polyvinylique ou de polychlorure de vinylidène par exemple).

On sait encore que, par nature, l'accrochage des revêtements finals d'application sur la surface des films polyester n'est pas aisée. En effet, les films polyester biétirés présentent une surface relativement lisse et ont une réactivité chimique limitée et une très faible sensibilité aux solvants. Il est donc le plus souvent nécessaire de mettre d'abord en oeuvre un revêtement "primaire d'adhérence", - permettant l'ancrage des couches d'emploi - selon des formules chimiques plus ou moins complexes. De façon générale, ce primaire d'adhérence (ou couche d'ancrage) est mis en place par le transformateur. Il est donc facile pour ce dernier d'adapter la nature du primaire à l'application ultérieure.

Les producteurs de films ont cherché à modifier eux-mêmes la surface des films par divers moyens. A cet effet, on a proposé l'emploi comme primaire d'adhérence de polymères de nature variée. Une classe particulièrement intéressante de polymères utilisés à ce titre est constituée par des copolyesters présentant une pluralité de groupes hydrophiles et notamment de groupes hydroxysulfonyles ou leurs sels métalliques (par la suite les groupes acide sulfonique libre ou sels d'acide sulfonique seront désignés par l'expression "groupe oxysulfonyle" par commodité). Le dépôt de primaires d'adhérence de ce type peut être réalisé soit par enduction du film support à l'aide d'une dispersion ou d'une solution aqueuse (cf. brevets français n° 1.401.581 et 1.602.002, soit par coextrusion ou laminage (cf. demande de brevet japonais publiée sous le n° 79/153 883). Dans le brevet européen n° 0 129 674, on a proposé l'emploi de copolyesters à groupes oxysulfonyles particuliers pour obtenir des films polyesters composites à adhérence améliorée présentant un primaire d'adhérence déposé par enduction. Ces copolyesters se caractérisent par une composition spécifique et en particulier par la présence de 15 à 25 % en moles, rapporté au total des motifs récurrents diacides, de motifs récurrents dérivés de diacides aliphatiques comportant de 3 à 13 atomes de carbone et de 6 à 15 moles % de motifs dérivés d'un acide dicarboxylique aromatique à groupe(s) oxysulfonyle(s) ; cette composition particulière des copolyesters sulfonés les rend aptes à la dispersion dans l'eau et confère aux couches d'ancrage obtenues des possibilités d'application plus étendues puisqu'elles améliorent l'adhérence du film polyester aussi bien pour des revêtements finals d'application aqueux que pour ceux contenant des solvants organiques. En dépit de leur intérêt, les films composites décrits dans le brevet européen n° 0 129 674 souffrent de l'inconvénient de devoir être fabriqués par enduction.

Le dépôt d'un primaire d'adhérence du type copolyester à groupes oxysulfonyles par enduction implique le recours à des copolyesters à teneures élevées en motifs récurrents à groupes oxysulfonyles afin d'en rendre possible la dispersion ou la dissolution dans l'eau ; ces teneurs doivent être supérieures à 6 % en moles. Le recours à l'enduction ne permet donc pas d'adapter la teneur en motifs récurrents à une valeur juste suffisante pour améliorer les propriétés d'adhérence. Par ailleurs, des teneurs élevées en motifs récurrents à groupes oxysulfonyles confèrent aux copolyesters sulfonés une très importante hygroscopicité qui se traduit par des difficultés de mise en oeuvre.

D'un autre côté, la coextrusion est un procédé de mise en place d'un revêtement primaire d'adhérence particulièrement recherché en raison de ses avantages. En effet, la coextrusion permet d'obtenir une liaison particulièrement bonne des films coextrudés à leur interface. Elle est cependant mal adaptée au dépôt sur un polyester semi-cristallin d'un revêtement de copolyesters sulfonés fortement modifiés, soit en raison d'une teneur élevée en motifs récurrents à groupes oxysulfonyles, soit à la fois par la présence de tels motifs et de motifs récurrents dérivés d'autres molécules utilisées pour conférer des propriétés particulières aux copolyesters sulfonés.

Ainsi, on a constaté que les copolyesters du type téréphtalates d'éthylèneglycol fortement modifiés décrits dans le brevet européen précité sont mal adaptés à la coextrusion avec des polyesters conduisant à des films semi-cristallins après les traitements usuels d'étirage et de thermofixation dans les conditions industrielles. On

a constaté en particulier que dans les conditions industrielles usuelles de formation des films semi-cristallins des copolyesters sulfonés conformes au brevet européen n° 0 129 674 se prêtent mal à la formation d'un film : ils donnent lieu à des régimes d'extrusion instables et/ou à de nombreuses casses qui rendent problèmatique l'obtention d'un film composite. Il s'est avéré en outre que plus le copolyester sulfoné contient de motifs récurrents dérivés de diacides aliphatiques, plus la couche d'ancrage subit une cristallisation superficielle induite par l'action des solvants présents dans les revêtements finals d'utilisation. Cette cristallisation sous l'effet des solvants peut provoquer une contraction du polymère de la couche d'ancrage et la formation de fractures et de plaquettes de copolyester qui se séparent aisément du film sous-jacent. Ce phénomène se traduit par une fragilité du primaire d'adhérence. Il est encore accentué par le procédé de coextrusion. En effet, dans les conditions de filmature industrielle des polyesters cristallisables à motifs polytéréphtalate d'éthylèneglycol, la présence d'une proportion importante de motifs diacides aliphatiques dans le copolyester sulfoné favorise la cristallisation et l'orientation de ce dernier. En définitive, et bien que les motifs diacides aliphatiques exercent un effet bénéfique sur les propriétés d'adhésion des copolyesters sulfonés définis dans le brevet européen précité, ces derniers ne conviennent pas à l'obtention d'un primaire d'adhérence par coextrusion. La présente invention s'est précisément proposé pour objectif de résoudre le problème posé par l'obtention d'un primaire à adhérence améliorée à partir d'un copolyester sulfoné à motifs diacide aliphatique apte à la coextrusion avec un polyester cristallisable.

Plus particulièrement :

Un premier objet de la présente invention réside dans des films composites coextrudés à base d'un copolyester cristallisable comportant un revêtement d'adhérence à base d'un copolyester sulfoné à motifs dérivés de diacides aliphatiques apte à recevoir des revêtements finals à partir de compositions aqueuses et/ou organiques ;

Un deuxième objet de la présente invention réside dans des films composites coextrudés à base d'un copolyester cristallisable comportant un revêtement primaire d'adhérence à base d'un copolyester sulfoné présentant une pluralité de motifs récurrents dérivés de diacides aliphatiques peu cristallisé et/ou orienté ;

Un troisième objet de la présente invention réside dans des films composites coextrudés à base d'un polyester cristallisable comportant un revêtement primaire d'adhérence constitué par un copolyester sulfoné présentant une pluralité de motifs récurrents dérivés de diacides aliphatiques qui présente à la fois une bonne aptitude au gonflement par les solvants organiques et/ou l'eau et une aptitude réduite à la cristallisation sous l'influence des solvants organiques présents dans les compositions pour revêtements finals d'application ;

Un quatrième objet de la présente invention réside dans un procédé de préparation de films polyester composites à base d'un polyester cristallisable comportant un revêtement primaire d'adhérence à base d'un copolyester sulfoné à motifs dérivés de diacides aliphatiques apte à la coextrusion avec un polyester cristallisable.

Un cinquième objet de la présente invention réside dans des films composites coextrudés à base d'un polyester cristallisable comportant un revêtement primaire d'adhérence constitué par un copolyester sulfoné présentant une pluralité de motifs récurrents dérivés de diacides aliphatiques et un revêtement final d'application déposé sur ledit primaire d'adhérence.

Plus spécialement un premier objet de la présente invention réside dans de nouveaux films polyester composites orientés coextrudés, à adhérence améliorée vis-à-vis de revêtements finals d'application, constitués par un film support (A) d'un polyester semi-cristallin, comportant sur au moins une de ses faces une couche contigüe d'un revêtement primaire d'adhérence (B) à base d'un copolyester à groupes oxysulfonyles constitué par une pluralité de motifs récurrents dérivés d'acides dicarboxyliques aromatiques, d'acides dicarboxyliques aliphatiques et de glycols, caractérisés en ce que le copolyester à groupes oxysulfonyles constituant la couche (B) comporte pour 100 moles de motifs d'acide dicarboxylique :

a) de 78 à 93 moles de motifs téréphtalates ;

b) de 2 à 5 moles de motifs dérivés d'un diacide aromatique à groupe(s) oxysulfonyle(s) ;

c) de 5 à 17 moles de motifs dérivés d'au moins un acide alcanedicarboxylique comportant de 4 à 15 atomes de carbone et moins de 6 % en poids de motifs dérivés de polyoxyalkylènediols.

Les copolyesters à groupes oxysulfonyles définis ci-avant se prêtent tout particulièrement bien à l'obtention de films composites par coextrusion avec un polyester cristallisable dans les conditions industrielles de filmature et les films composites coextrudés à revêtement primaire d'adhérence présente une excellente adhérence à des revêtements finals d'application variés.

Par polyester cristallisable, on désigne dans la présente demande, des polyesters ou copolyesters qui, après extrusion à l'état fondu à travers une filière puis étirage du polymère amorphe, conduisent à des polyesters ou copolyesters semi-cristallins. La cristallinité des polymères est déterminée par les moyens usuels bien connus du spécialiste tels que la diffraction des rayons X, l'analyse thermique différentielle (cf. S.H.LIN et al J. Polymer Sci. Polymer. Symposium 71 121-135 (1984) et le test de densité.

Les polyesters cristallisables mis en oeuvre pour la préparation de la couche support (A) sont les polyesters et copolyesters utilisés habituellement pour l'obtention des films polyester orientés par étirage et présentant, après étirage, une structure semi-cristalline.

A ce titre, on peut faire appel à tout polyester filmogène obtenu à partir d'un ou de plusieurs diacide(s) carboxylique(s) ou de leurs esters d'alkyle inférieur, (acide téréphtalique, acide isophtalique, acide naphtalènedicarboxylique-2,5, acide naphtalènedicarboxylique-2,6, acide naphtalènedicarboxylique-2,7, acide succinique, acide sébacique, acide adipique, acide azélaïque, acide diphényldicarboxylique et acide hexahydrotéréphtalique).

Les diols associés aux diacides sont ceux habituellement utilisés pour l'obtention de polyesters cristallisables ; on peut citer, à titre non limitatif : l'éthylèneglycol, le propanediol-1,3, le butanediol-1,4, le néopentylglycol, le cyclohexane-diméthanol, le diéthylèneglycol. Ces diols peuvent être utilisés seuls ou en mélanges. Lorsqu'on fait appel à des copolyesters, ils doivent présenter un taux suffisant du ou des composant(s) monomère(s) conférant la cristallinité.

On fait appel de préférence aux homopolyesters et aux copolyesters dérivés de l'acide téréphtalique. Dans ce cas, les copolyesters, comportent de préférence un taux de motifs téréphtalates représentant au moins 80 % en moles des motifs diacides et plus préférentiellement au moins 90 %. Les polyesters et copolyesters dérivés de l'éthylèneglycol et du butanediol-1,4 constituent une classe préférée de polymères utilisés pour la réalisation de la couche support (A). Avantageusement, le polyester est un polytéréphtalate d'éthylèneglycol dont la viscosité intrinsèque mesurée à 25°C dans l'o-chlorophénol est comprise entre 0,6 et 0,75 dl/g.

Les copolyesters à groupes oxysulfonyles constituant la couche B présentent une pluralité de groupes de formule générale :

$$(-SO_3)_nM \qquad (I)$$

dans laquelle

– n est égal à 1 ou 2

– M représente un atome d'hydrogène, un métal alcalin (sodium ou potassium par exemple), un métal alcalino-terreux (calcium, barium), un cation ammonium ou ammonium quaternaire, introduits dans la chaîne du polymère par des diacides carboxyliques aromatiques comportant un ou plusieurs groupes de formule (I) tels que ceux cités dans le brevet français 1.602.002 ou le brevet américain 3.779.993.

Parmi les diacides aromatiques à groupes oxysulfonyles, on utilise plus préférentiellement des acides de formule générale :

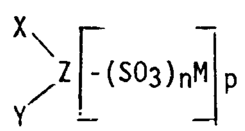

(II)

dans laquelle :

– M et n ont la signification déjà donnée ;

– Z est un radical aromatique polyvalent ;

– X et Y sont des radicaux hydroxycarbonyle ou dérivés : esters d'alcools aliphatiques inférieur ou halogénures d'acides (chlorure, bromure) ;

– p est un nombre entier égal à 1 ou 2.

Dans la formule (II), Z représente plus spécifiquement un radical phényle ou une combinaison de 2 ou plus de 2 radicaux phényles ortho ou péricondensés ou de deux ou plusieurs groupes phényles liés entre eux par des groupes inertes tels que des radicaux alcoylidènes (propylidène) ou des groupes éther, cétone, sulfone.

Comme exemples spécifiques d'acides dicarboxyliques à groupes oxysulfonyles, on peut citer les acides hydroxysulfonyltéréphtalique ; hydroxysulfonylisophtaliques (en particulier, l'acide sulfo-5 isophtalique) ; hydroxysulfonylorthophtaliques ; hydroxysulfonyl-4 naphtalènedicarboxylique-2,7 ; hydroxysulfonyldiphényldicarboxylique-4,4'; les hydroxysulfonyl di-hydroxycarbonyl-4,4' diphénylsulfones ; les hydroxysulfonyldihydroxycarbonyl-4,4' diphénylméthanes ; l'acide (hydroxysulfonylphénoxy)-5 isophtalique, l'acide (hydroxysulfonylpropoxy)-5 isophtalique. Les copolyesters sulfonés dérivés des acides hydroxysulfonylisophtaliques conviennent tout particulièrement bien à la préparation des films composites selon l'invention.

Pour l'obtention des copolyesters sulfonés les acides dicarboxyliques à groupes oxysulfonyles peuvent être utilisés sous leur forme acide ou, de préférence sous forme de leurs dérivés (halogénures ou esters d'alkyle inférieurs) capables de générer des polyesters. On fait appel de préférence aux diesters méthyliques. Le ou les groupes sulfoniques du dicacide ou de ses dérivés est (sont) de préférence sous forme de sels alcalins.

Comme acides alcane dicarboxyliques auxquels on peut faire appel comme composants c) des copolyesters à groupes oxysulfoniques, on peut citer à titre non limitatif les acides adipique, succinique, sébacique, azélaïque, glutarique ou subérique. Ces acides peuvent être mis en oeuvre sous forme acide ou sous forme de tout dérivé susceptible de générer un polyester ; on fait appel de préférence aux halogénures (chlorure ou bromure) ou aux esters d'alkyles inférieurs (méthyle, éthyle, propyle, butyle). On pourrait, sans sortir du cadre de la présente invention, associer deux ou plus de deux acides alcanedioiques ou leurs dérivés pour préparer les copolyesters à groupes oxysulfonyles.

Les diols auxquels il est fait appel pour la préparation des copolyesters sulfonés formant la couche (B) des films composites selon l'invention sont ceux généralement utilisés pour la préparation des polyesters. On fait appel de préférence à des diols aliphatiques saturés comportant de 2 à 4 atomes de carbone : l'éthylèneglycol, le propylèneglycol butanediol-1,4. Ces diols peuvent être utilisés seuls ou en mélange entre eux ou avec des diols plus fortement condensés en carbone tels que le diméthyl-2,2 propanediol-1,3 ; l'hexanediol-1,6 ; le néopentylglycol ; le cyclohexanediméthanol. Dans ce dernier cas la quantité de diol de condensation en carbone supérieure ou égale à 5 est choisie de façon à ne pas augmenter l'aptitude à la cristallisation du copolyester sous l'influence des solvants ; cette quantité dépend de la condensation en carbone et de la structure du diol considéré. Pour la même raison il est préférable d'éviter ou de limiter la présence dans la structure du copolyester sulfoné de motifs récurrents dérivés de polyoxyalkylèneglycols tels que le diéthylèneglycol, le triéthylèneglycol, le pentaéthylèneglycol, le décaéthylèneglycol. Ainsi la teneur pondérale en polyoxyalkylèneglycol du copolyester est de préférence inférieure à 6 % et plus préférentiellement encore inférieure ou égale à 5 %. Pour l'obtention des copolyesters à groupes oxysulfoniques, on fait appel de préférence à l'éthylèneglycol qui peut être associé, le cas échéant, à une quantité mineure d'au moins un des diols précités.

Les copolyesters sulfonés décrits ci-avant peuvent être préparés par les procédés connus habituels. A cet effet, on peut faire réagir dans un premier temps un diol ou un mélange de diols avec les composants acides ou leurs dérivés (halogénures ou esters) en présence d'un catalyseur d'estérification ou de transestérification pour former les esters de diols correspondants puis, dans un deuxième temps, réaliser la polycondensation des esters de diols en présence des catalyseurs usuels.

Pour la réalisation de films polyesters composites à adhérence améliorée, on fait appel de préférence à des copolyesters sulfonés comportant de 2 à 5 % de motifs diacides aromatiques à groupes(s) oxysulfonyles(s), 7 à 15 % de motifs acide alcanedioique et de 80 à 91 % de motifs téréphtalates et moins de 5 % en poids de motifs polyoxyalkylèneglycol. Les conditions de préparation des copolyesters à groupes oxysulfonyles sont donc choisies de façon à éviter ou à limiter la polyaddition du ou des glycols au cours de la phase d'estérification. En particulier, il est préférable de ce point de vue de mettre en oeuvre des esters des diacides et des acides à groupes sulfoniques sous forme de sels alcalins.

Les films polyesters composites coextrudés à adhérence améliorée qui constituent l'objet de la présente invention peuvent comporter une couche d'adhérence (B) sur une des faces du film support (A) ou une couche (B) sur chacune des faces du film support (A).

Les couches (A) et/ou (B) des films composites selon l'invention peuvent contenir le cas échéant de fines particules de charges destinées à modifier leurs propriétés de surface (rugosité, coefficient de frottement, résistance à l'abrasion, aptitude anthermoscellage par exemple). Ces particules peuvent avoir été introduites dans la composition polymérique avant polyconcensation ou après formation du polycondensat par les procédés usuels ou bien résulter de la précipitation de résidus catalytiques. Les quantités de particules ajoutées représentent de 0,01 à 1 % en poids du polyester constituant les couches (A) et/ou (B) et de préférence de 0,05 à 0,5 % en poids. Le diamètre médian en volume de ces particules est habituellement compris entre 0,1 et 5 micromètres.

La nature des particules inertes ajoutées peut être très variée : il peut s'agir de particules minérales (oxydes ou sels des éléments des groupes II, III et IV de la classification périodique des éléments), ou encore de particules polymériques. A titre illustratif, on peut citer parmi les charges utilisables : la silice, les silicoaluminates, le carbonate de calcium, l'oxyde de titane du type anatase, MgO, l'alumine, le sulfate de barium.

En plus des charges décrites ci-avant, les couches (A) et/ou (B) des films composites selon la présente invention peuvent contenir les additifs utilisés habituellement dans l'industrie du film tels que des stabilisants thermiques, des agents antistatiques, etc... Lorsque les films composites selon la présente invention comporte une couche (B) sur chaque face du film support (A), les deux couches (B) peuvent être identiques ou différentes. Elles peuvent se différencier par leur épaisseur, la nature du polyester sulfoné qui les constitue, la présence ou l'absence de charges et/ou par le taux de charge et/ou par la nature et/ou la granulométrie de la charge.

Lorsque les films composites conformes à l'invention, ne comportent qu'une couche (B), l'autre face de la couche (A) peut comporter une couche (C) différente des couches (A) et (B). La couche (C) peut se distinguer de la couche (A) par la nature du polyester qui la constitue et/ou par la présence de charges dans l'une ou l'autre couche et/ou par la nature et/ou la granulométrie et/ou le taux de ces charges. On dispose alors d'un moyen commode de modifier les propriétés de surface (topographie de la face du film composite selon l'invention opposée à celle qui porte la couche (B). On peut alors en faire varier la rugosité, le coefficient de frottement, la résistance à l'abrasion en fonction de l'utilisation finale des films.

L'obtention des films composites selon l'invention est réalisée par l'extrusion simultanée d'un polyester cristallisable pour former le film support (A) et d'un copolyester sulfoné. A cet effet on extrude à l'aide d'une première extrudeuse un flux (A) de polyester cristallisable et, simultanément, à l'aide d'une deuxième extrudeuse un flux (B) du copolyester sulfoné destiné à former la ou les couches (B) de primaire d'adhérence. Les deux extrudeuses sont reliées à une boîte de coextrusion dans laquelle le flux (B) peut être, le cas échéant, divisé en deux flux (B). Les courants de polymères fondus sont transformés en films amorphes contigüs par passage dans une filière plate. Le film amorphe cristallisable (A)et le (ou les) film(s) de copolyester sulfoné sont soumis ensemble aux opérations habituelles de filmature : trempe, étirage, thermofixation et bobinage.

Les conditions de filmature sont celles mises en oeuvre habituellement industriellement pour l'obtention de films polyesters semi-cristallins orientés. Au sortir des filières, le film composite amorphe est refroidi à une température comprise entre 10°C et 45°C sur un tambour de coulée.

Les conditions d'étirage du film composite extrudé sont celles habituellement mises en oeuvre dans la fabrication des films polyester semi-cristallins. Ainsi, on peut procéder à un monoétirage ou à un biétirage effectué successivement ou simultanément dans deux directions en général orthogonales ou encore par séquences d'au moins 3 étirages où la direction d'étirage est changée à chaque séquence. Par ailleurs, chaque étirage monodirectionnel peut lui-même être effectué en plusieurs étapes. On pourra ainsi associer des séquences d'étirage comme par exemple deux traitements successifs de biétirage, chaque étirage pouvant être effectué en plusieurs phases.

De préférence, le film composite est soumis à un biétirage dans deux directions perpendiculaires. On peut, par exemple, procéder d'abord à un étirage dans la direction de déplacement du film (étirage longitudinal) puis à un étirage selon une direction perpendiculaire (étirage transversal) ou inversement. En général, l'étirage longitudinal est effectué à un taux de 3 à 5 (c'est-à-dire que la longueur du film étiré représente de 3 à 5 fois la longueur du film amorphe) et à une temperature de 80 à 135°C et l'étirage transversal est effectué avec un taux de 3 à 5 à une température de 90 à 135°C et de préférence entre 100 et 125°C.

Après étirage le film composite est soumis à un traitement thermique à une température comprise entre 160 et 240°C. Les meilleurs résultats en adhésion des revêtements finals sont obtenus pour des températures de thermofixation comprises entre 220 et 235°C selon la composition du copolymère constituant la ou les couches B.

Lorsque la température de thermofixation est inférieure à 220°C il est préférable pour obtenir une adhérence aussi élevée que possible, d'augmenter la température d'étirage longitudinal et plus particulièrement de la porter à une valeur comprise entre 120 et 135°C.

L'étirage peut également être effectué de manière simultanée, c'est-à-dire simultanément dans le sens longitudinal et dans le sens tranversal, par exemple avec un taux de 3 à 5 et à une température de 80 à 120°C.

Le débit des extrudeuses dépend des épaisseurs que l'on désire conférer aux couches (A) et (B). L'épaisseur de la couche (A) est fonction de l'application envisagée. S'il s'agit d'un film dit mince destiné à la fabrication de bandes magnétiques ou d'emballages par exemple, l'épaisseur du film (A) est inférieure ou égale à 40 micromètres (de 5 à 40 micromètres) ; s'il s'agit de films épais utilisés dans les arts graphiques, le film (A) présente une épaisseur supérieure à 40 micromètres et qui peut atteindre 300 micromètres. Dans les films composites coextrudés selon l'invention, l'épaisseur de la (ou de chaque) couche B est en général comprise entre 0,1 et 5 micromètres et de préférence entre 0,1 et 2,5 micromètres. Pour la fabrication des films composites coextrudés on a recours aux appareillages de coextrusion utilisés habituellement dans l'industrie. Ces dispositifs comportent deux ou trois têtes d'extrusion alimentées par des extrudeuses.

On pourrait, sans sortir du cadre de la présente invention, obtenir des films composites à primaire d'adhérence sulfoné par coextrusion du polyester cristallisable et d'au moins un flux de copolyester sulfoné à travers une filière annulaire puis soufflage de la gaine composite coextrudée.

Les films composites coextrudés selon la présente invention présente une adhérence améliorée vis-à-vis de revêtements finals très variés utilisés dans le domaine des films minces ou dans le domaine des films épais. Plus particulièrement, ils présentent une adhérence améliorée aux encres utilisées dans le domaine du film pour emballage, aux revêtements métalliques (par exemple à l'aluminium) aux couches barrières (alcool polyvinylique, copolymères alcool vinylique/éthylène, polychlorure de vinylidène, polyfluorure de vinylidène etc...), aux couches de thermoscellage. Les films polyesters composites présentent également une adhérence améliorée aux revêtements finals utilisés dans les arts graphiques tels que les couches de matage, les revêtements diazoïques, les revêtements antistatiques, les encres en poudres pour reproduction, les peintures et vernis réticulables par irradiation, les encres diélectriques, etc...

Les films complexes obtenus par dépôt par tout moyen approprié (enduction en ligne ou en reprise, extrusion-couchage, laminage, métallisation, etc...) d'un revêtement final d'application sur les films composites de

la présente invention constituent un autre objet de l'invention.

Plus spécifiquement, la présente invention a encore pour objet des films polyester composites complexes comprenant a) un film polyester composite orienté coextrudé constitué par un film support (A) d'un polyester semi-cristallin comportant sur au moins une de ses faces une couche contigüe d'un revêtement primaire d'adhérence (B) à base d'un copolyester à groupes oxysulfonyles présentant une pluralité de motifs récurrents dérivés d'acides dicarboxyliques aromatiques, d'acides alcane dioiques et de glycols, et b) un revêtement final d'application déposé sur au moins une des couches du primaire d'adhérence (B) caractérisé en ce que le copolyester à groupes oxysulfonyle constituant ladite couche (B) comportent pour 100 moles de motifs récurrents dérivés d'acides dicarboxyliques :

a) de 75 à 93 moles de motifs téréphtalates ;

b) de 2 à 5 moles de motifs dérivés d'au moins un acide aromatique dicarboxylique à groupes(s) oxysulfonyle(s) ;

c) de 5 à 17 moles de motifs dérivés d'un acide alcanedioique comportant de 4 à 15 atomes de carbone.

Lorsque le film composite coextrudé comporte une couche de primaire d'adhérence (B) sur chaque face du support (A), il est possible de mettre en place sur chacune des couches (B) un revêtement final d'application ; ainsi, à titre d'exemple, une des faces du film composite peut porter une couche d'aluminium et l'autre un revêtement améliorant la thermoscellabilité (polyéthylène)) ou les propriétés d'imperméabilité aux gaz (alcool polyvinylique par exemple).

Les exemples suivants illustrent l'invention et montrent comment elle peut être mise en pratique. Dans ces exemples, les tests dont la description figure ci-après ont été utilisés :

1°) Détermination des propriétés des films :

a) Rugosité moyenne Ra (également appelée rugosité CLA de l'expression anglaise "center line average") ;

b) Rugosité totale Rt ou hauteur pic/vallée ;

Ra et Rt sont définies dans la norme ISO R 468 et mesurées selon les méthodes décrites dans cette norme. La mesure correspond à la moyenne de 10 résultats ; les divers facteurs de mesure sont les suivants :

- seuil de filtrage (ou "cut-off") : 0,08 mm
- longueur de palpage : 1,75 mm
- rayon de courbure du palpeur : 5 micromètres
- force d'appui du palpeur : 50 mg

c) Pourcentage de lumière dispersée transmise :

Cette mesure qui caractérise la turbidité des films, est effectuée selon la norme ASTMD 100 (elle est également désignée sous le terme anglais "haze"). Elle sera dénommée ci-après "turbidité" par raison de commodité.

2°) Détermination des propriétés d'adhérence

Pour procéder à cette détermination, les films composites selon l'invention sont pourvus sur la (ou les) couche(s) B d'un revêtement final d'application par couchage automatique au moyen d'un appareil de marque commerciale HAND COATER dont la barre gravée d'enduction est choisie pour déposer 7 g de composition par m2. Les films enduits sont séchés en étuve ventilée à une température et pendant une durée propre à chaque composition.

La détermination de l'adhésion des revêtements finals au film composite support est réalisée selon les deux méthodes décrites ci-après :

a) Méthode manuelle avec appréciation visuelle

Sur des échantillons de film de 15 cm x 20 cm, on procède à des essais d'arrachage du revêtement final au moyen d'un ruban adhésif de marque commerciale déterminée. La pose du ruban est manuelle et l'arrachage se fait dans les conditions suivantes :

a) arrachage lent

b) arrachage rapide

c) arrachage avec scarification préalable du revêtement final au moyen d'une lame de rasoir.

d) arrachage avec froissage préalable du film.

Pour chaque type d'arrachage, la résistance du revêtement final est notée de 1 (arrachage total aisé du

revêtement) à 10 (tenue parfaite du revêtement). Enfin une note globale de 1 à 10, tenant compte des notes attribuées pour chacune des conditions a) à d) donne une évaluation générale de la résistance à l'arrachage des revêtements finals pour chacun des tests.

b) Méthode de mesure de la force d'arrachage (ou de délaminage)

Cette méthode de mesure de la force d'arrachage du revêtement final est conduite de la façon suivante :

Sur une éprouvette de film revêtu de 20 cm de longueur et de 4 cm de largeur découpée dans le sens long du film, un ruban adhésif de marque commerciale déterminée est déposé sans pression en laissant subsister une amorce de film revêtu et une amorce de ruban adhésif de 4 cm de long. L'ensemble éprouvette/ruban adhésif est mis en place sur un marbre puis une roulette de 4 kg le parcourt à raison de 5 allers-retours en partant du côté opposé à l'amorce.

L'amorce de film revêtu est solidarisée à une machoire fixe reliée à un capteur de force qui délivre une tension de 10 volts pour 25 daN ou 5 daN, lui-même raccordé à un oscilloscope numérique permettant l'acquisition et le traitement du signal électrique fourni par le capteur en fonction du temps. L'oscilloscope est relié à un traceur permettant d'enregistrer la courbe de variation de la tension électrique en fonction du temps. L'oscilloscope permet également d'intégrer le signal sur la longueur totale de l'éprouvette. L'amorce de ruban adhésif est fixée dans une machoire mobile solidaire d'un câble de traction métallique ; la seconde extrémité du câble est reliée à une roue de 195 mm de diamètre mise en rotation par un moteur de 0,5 CV pouvant tourner à des vitesses de 16 à 144 t/mn et qui communique à la machoire mobile une vitesse linéaire qui peut être comprise entre 9,8 et 88 m/mn. Le capteur relié à la machoire fixe et le moteur sont fixés aux deux extrémités d'un bâtis rigide en fer à U de 1,6 m de long.

Lors de la mesure de la force d'arrachage, la vitesse de rotation du moteur est règlée pour que la vitesse de délaminage soit de 1 m/s. L'oscilloscope est mis en marche puis le moteur est enclanché. On procède ensuite à l'intégration du signal électrique sur tout ou partie de la longueur de l'éprouvette puis on procède au calcul de la force moyenne de délaminage en tenant compte de la sensibilité du capteur utilisé (25 daN ou 5 daN) pour 10 Volts et de la largeur du ruban adhésif.

Selon la nature du revêtement final, on fait appel à un ruban adhésif de 2,5 cm de largeur vendu sous la marque commerciale SCOTCH 396 par la société MINESOTA MINING MANUFACTURING Co.(3M) ou à un ruban adhésif de 2,5 cm de largeur vendu sous la marque commerciale TESABAND 4651 par la société TESA.

EXEMPLE 1

a) Préparation d'un copolyester à groupes oxysulfoniques

Dans un réacteur en acier inoxydable de 300 litres muni d'un agitateur à ancre, d'une double enveloppe pour circulation d'un liquide caloporteur, d'un thermocouple et d'une colonne de distillation régulée par une électrovanne, on introduit à froid :

. 104,042 kg ( 536,3 moles) de téréphtalate de diméthyle (DMT) ;
. 6,423 kg ( 21,7 moles) de sulfo-5 isophtalate de diméthyle (SIPDM) ;
. 10,788 kg ( 62 moles) d'adipate de diméthyle (ADM) ;
. 76,88 kg (1240 moles) d'éthylène glycol ;
. 10,7 g d'aminotriéthanolate de titane comme catalyseur de transestérification ;
. 75,29 g de trioxyde d'antimoine comme catalyseur de polycondensation
et 1,981 g d'acétate de sodium.

L'agitation est mise en marche puis le contenu du réacteur est porté rapidement à 180°C, température à laquelle le méthanol commence à distiller. La température dans le mélange réactionnel est amenée à 220°C en 2 h 40. L'excès de glycol est éliminé par distillation entre 220 et 250°C en 1 heure.

La masse réactionnelle est alors transférée dans un autoclave chauffé à 250°C. La pression est réduite à 0,5 torr. La polycondensation est poursuivie pendant 2 h 15 mn de façon à obtenir un copolyester d'indice de viscosité égal à 52,4 mesurée sur une solution à 1 % en poids dans l'orthochlorophénol à 25°C. La pression dans l'autoclave est ramenée à 760 torrs par introduction d'azote puis le copolyester fondu est soutiré sous une roue de coulée et granulé.

Le copolyester ainsi obtenu (104 kg) fait ensuite l'objet des déterminations suivantes :

– dosage des groupes carboxyliques terminaux par potentiométrie au moyen d'une solution aqueuse 0,2 N de soude, à partir d'une solution à 1 % en poids de copolyester dans l'orthocrésol (soit 15,6 équivalents molaires/tonne).

– dosage des groupes méthoxy par dégradation à l'acide iodhydrique et dosage par chromatographie

gazeuse sur une solution dans l'orthocrésol (soit 8,9 équivalents molaires par tonne) ;
– dosage des motifs diéthylèneglycol par chromatographie gazeuse après saponification du copolyester (3,17 % en poids du copolyester).

Il comporte 86,5 % en mole de motifs téréphtalates, 10 % en mole de motifs adipates et 3,5 % en mole de motifs sulfo-5 isophtalate.

Le copolyester décrit ci-avant présente une masse moléculaire moyenne en nombre Mn, mesurée à 80°C dans la N-méthylpyrrolidone, de 23000, une température de transition vitreuse de 55°C, une température de fusion de 230°C, une température de début de cristallisation de 120°C et une température de pic de cristallisation de 142°C. Par la suite, ce copolyester sera désigné sous la référence B-1.

Le copolyester B-1 a été séché dans un séchoir en lit fluidisé pendant 1 heure à 175°C puis introduit dans des sacs étanches. Il présente après séchage une teneur en eau de 50 parties par million (ppm) et les granulés ne donnent lieu à aucun collage.

b) préparation d'un film composite

On prépare un film composite comportant une couche (A) d'un polytéréphatalate d'éthylène glycol et deux couches (B) de copolyester B-1 de part et d'autre de la couche (A) par coextrusion au moyen d'un dispositif comportant une ligne principale d'extrusion et deux lignes satellites.

La ligne d'extrusion principale a un débit de 910 kg/heure en polytérépthalate d'éthylèneglycol (PET) présentant un indice de viscosité de 64 mesurée à 25°C sur une solution à 1 % en poids dans l'orthochlorophénol. Le PET (A) est constitué par un mélange de 60 parties d'un PET non chargé et de 40 parties du même PET contenant 0,2 % en poids de silice de diamètre particulaire moyen égal à 1 micromètre déterminé au moyen d'un granulomètre à diffusion de lumière.

La température de la ligne principale d'extrusion est de 280°C.

Les deux lignes satellites ont un débit de 15 kg/heure en copolyester B-1 et travaillent à une température comprise entre 250 et 260°C.

Les trois veines de polyester sont extrudées à travers une filière plate. La nappe coextrudée est trempée sur un tambour de refroidissement maintenu à 35°C puis subit un étirage longitudinal à un taux de 3,32 à une température de 115°C et ensuite un étirage tranversal à un taux de 3,37 dans une zone maintenue à une température comprise entre 105 et 120°C. Le film composite biétiré est soumis à une thermofixation à 225-230°C, refroidi et bobiné.

On obtient de cette façon un film composite désigné ci-après F (B1) de type B1/A/B1, présentant une épaisseur totale de 50 micromètres et dont les couches B-1 ont une épaisseur de 0,4 micromètres.

Le film F(B1) ainsi préparé a une rugosité moyenne Ra de 0,045 µm, une rugosité totale Rt de 0,75 µm et un pourcentage de lumière dispersée transmise de 9,2. Le film F(B1) a été enduit selon la méthode décrite auparavant à l'aide des compositions de matage suivantes :

. Composition n° 1

Composition de matage pour film à sensibiliser constituée par une solution d'acétopropionate de cellulose dans un mélange acétone (88 % en volume)/méthanol 12 % en volume), contenant de la silice. La teneur totale de la composition en extrait sec est de 25 % en poids ; l'acétopropionate de cellulose représente 66,6 % en poids de l'extrait sec et la silice 33,3 % en poids.

. Composition n° 2

Composition de matage pour film à dessin consistant en une solution d'alcool polyvinylique (PVA) dans un mélange méthanol (87 % en volume)/eau (13 % en volume) contenant une résine mélamine/formol et de la silice. La teneur en extrait sec de la composition s'élève à 20 % en poids ; le liant PVA représente 50 % en poids de l'extrait sec et la silice 50 %.

Des échantillons de film F (B1) enduit ont été ensuite soumis aux tests de détermination de l'adhérence de l'enduit au support F (B1) à l'aide du ruban adhésif SCOTCH 396 ; les résultats obtenus ont été consignés dans le tableau (I) suivant.

TABLEAU I

| Composition n° 1 | | Composition n° 2 | |
|---|---|---|---|
| F en g/cm (1) | Note | F en g/cm (1) | Note |
| 250 | 10 | 30 | 10 |

(1) Force de délaminage

EXEMPLES 2 à 5

En opérant comme à l'exemple 1, on a préparé des copolyesters sulfonés convenant pour l'obtention de films composites selon la présente invention et, à titres comparatifs, des copolyesters sulfonés convenant à l'enduction selon l'état de la technique. La composition et les caractéristiques physiques de ces copolyesters sont consignées dans le tableau (II).

En opérant comme à l'exemple 1, les copolyesters B2 à B5 et les copolyesters BC-1 et BC-2 ont été coextrudés avec le PET standard défini à l'exemple 1 sous forme de films composites de type B/A/B.

Il n'a pas été possible d'obtenir des longueurs de films coextrudés de ce type suffisantes avec les copolyesters sulfonés BC3 à BC7 en raison de la casse des films dans les conditions de filmature industrielle du support PET.

TABLEAU II

| Ref. copolyester | AT % (1) | Motifs aliphatiques | | ASI % (2) | DEG % (3) | IV (4) | Mn | Tg °C (5) | TC °C (6) | Tf °C (7) | COOH (8) | -OCH3 (9) |
|---|---|---|---|---|---|---|---|---|---|---|---|---|
| | | Nature | % | | | | | | | | | |
| B 2 | 81,5 | adipate | 15 | 3,5 | 4,35 | 69,9 | 28570 | 54 | 133 | 208 | 15,2 | 1 |
| B 3 | 86,5 | idem | 10 | idem | 2,75 | 51 | 25000 | 55 | 132 | 230 | 16 | 5,5 |
| B 4 | 86,5 | sébaçate | idem | idem | 5 | 71 | | 51 | 132 | 210 | 26,5 | 3,8 |
| B 5 | 81,5 | idem | 15 | idem | 4,8 | 69 | | 30 | 136 | 204 | 9,8 | 0,9 |
| BC 1 | 90 | adipate | 10 | 0 | 1,1 | 93 | | 54 | | | 5,8 | 1,3 |
| BC 2 | 86,5 | idem | idem | 3,5 | 6 | 55,4 | | 51 | | 212 | 7,2 | 0,9 |
| BC 3 | 76,5 | idem | 20 | 3,5 | 5,4 | 73 | | 26,5 | | | 6,6 | 4,1 |
| BC 4 | 66,5 | idem | 30 | 3,5 | 5,3 | 79 | | 20 | | | 5,7 | 0,9 |
| BC 5 | 83 | idem | 10 | 7 | 10,8 | 60 | | 41,7 | | | 25,7 | 9,1 |
| BC 6 | 73 | idem | 20 | 7 | 7,52 | 63 | | 32 | | | 14,3 | 9,3 |
| BC 7 | 73 | sébaçate | 20 | 7 | 6,4 | 65 | | 24 | | | 21,3 | 16,1 |

(1) motifs acide térèphtalique ; (4) indice de viscosite ; (7) température de fusion ;
(2) motifs sulfo-5 isophtalique ; (5) température de transition ; (8) nombre de groupes carboxyles ;
(3) diéthylèneglycol ; (6) température de cristallisation ; (9) nombre de groupes méthoxy.

Les films composites FB-2 à FB-5 et F-BC-1 à F-BC-2 obtenus, ont été enduits selon le mode opératoire déjà décrit à l'aide de la composition n° 1 définie à l'exemple 1 et soumis aux tests d'adhérence. Les résultats obtenus sont consignés dans le tableau III.

TABLEAU III

| EX | Réf. Films | Note | F en g/cm |
|---|---|---|---|
| 2 | FB 2 | 8 | 270 |
| 3 | FB 3 | 9 | 260 |
| 4 | FB 4 | 9 | 280 |
| 5 | FB 5 | 8 | |
| | F B C 1 | 3 | 65 |
| | F B C 2 | 6 | 150 |

EXEMPLE 6

On a préparé un film métallisé par dépôt d'une couche d'aluminium sur une des faces du film FB1 décrit à l'exemple 1 par métallisation sous vide selon le procédé usuel. Le film métallisé ainsi obtenu a été soumis à deux tests de mesure de la force de délaminage :

Méthode utilisée à l'exemple 1

Les rubans adhésifs suivants ont été utilisés :
– ruban vendu sous la marque commerciale SCOTCH 396 par la société 3 M (largeur 25 mm).
– ruban vendu sous la marque commerciale TESABAND 4651 par la société TESA (largeur 25 mm).

Avec le ruban SCOTCH 4 mesures ont été effectuées conduisant à une valeur moyenne de la force de délaminage de 300 g/cm qui correspond à la force nécessaire pour provoquer la séparation du ruban et de la couche métallique ; l'examen de cette dernière montre qu'aucun arrachage du métal n'est intervenu. On a noté par contre un transfert partiel de l'adhésif sur la couche métallique.

Avec le ruban TESABAND la force de délaminage ruban/couche métallique est de 140 g/cm (moyenne de 3 essais). La couche métallique est restée intégralement sur le support polyester.

Méthode 2

Sur une éprouvette de film métallisé de 20 mm de largeur et 150 mm de longueur, découpée dans le sens de la longueur du film initial on place un ruban adhésif vendu sous la marque PRIMACOR 3460 par la société PRIMACOR (largeur 20 mm ; longueur 150 mm). Le complexe obtenu est introduit sur une longueur de 2,5 cm entre les deux machoires d'une presse dont l'une est chauffée, le ruban adhésif étant en contact avec la machoire chauffée. Le ruban adhésif et le film métallisé sont scellés en exerçant une pression de 3,5 kg/cm$^2$ pendant une seconde sous une température de la machoire supérieure chauffante de 106°C.

Les parties non scellées du complexe sont introduites et fixées chacune dans une machoire d'un appareil de mesure de la force de délaminage de marque commerciale INSTRON immédiatement après avoir été maintenues 1 heure à 23°C dans une enceinte à 50% d'humidité relative. L'amorce de film métallisé est introduite dans la machoire mobile et l'amorce de ruban adhésif dans la machoire fixe ; l'angle de délaminage est maintenu à 90°C au moyen d'une réglette d'aluminium de section 20 X 10 mm. On exerce ensuite une traction sur la partie scellée en provoquant le déplacement de la machoire mobile à la vitesse de 2 m/mn. La force nécessaire à provoquer la rupture de la liaison entre deux des couches du complexe (force de délaminage) est notée. La mesure est répétée sur cinq échantillons et la moyenne des cinq valeurs obtenues est calculée. On mesure également la densité optique des échantillons de films métallisés avant et après le test et évalue le pourcentage de surface de métal arrachée.

Dans le cas présent on a obtenu les résultats suivants :
– moyenne de la force de délaminage : 475 g/cm
– pourcentage de surface métallique arrachée : 0
– densité optique du film métallisé :

. avant le test : 2,4
. après le test : 2,4
Ces essais montrent une excellente adhérence du revêtement métallique au support polyester.

EXEMPLE 7

En opérant comme à l'exemple 1 on a préparé un film composite de 12 μm d'épaisseur par coextrusion du copolyester B1 et du polyester A décrit dans cet exemple. La ligne d'extrusion principale est alimentée en PET (A) avec un débit de 645 kg/h et les lignes satellites en copolyester B1 avec un débit de 15 kg/h.

On obtient de cette façon un film composite du type B1/A/B1 dans lequel les couches B1 ont une épaisseur de 0,12 μm chacune, présentant un pourcentage de lumière dispersée égal à 3,7, des rugosités Ra et Rt de respectivement 0,045 et 0,902, un retrait à 150°C dans le sens longitudinal de 0,92 % et un module dans le sens longitudinal de 435 kg/mm2.

Le film composite décrit précédemment a été soumis à une métallisation sous vide au moyen d'aluminium sur une de ses 2 faces. La densité optique du revêtement métallique avait une valeur de 3,2.

Le film métallisé a été soumis à une mesure de la force de déliminage selon la méthode 2 décrite à l'exemple 6. On a obtenu les résultats suivants :

. moyenne de la force de délaminage : 65 g/20mm.
. pourcentage de surface métallique arrachée : 0
. densité optique de films métallisé après le test : 3,1.

EXEMPLE 8

On a préparé un films stratifié à partir du film composite métallisé décrit à l'exemple 7 par assemblage de façon connue avec un film de polyéthylène de 32 μm d'épaisseur mis en place sur la face métallisée du composite à l'aide d'une colle vendue sous la marque commerciale MORTON 575 S par la Société MORTON et avec un film de polyéthylène de 38 μm mis en place à l'aide de la même colle sur la face non métallisée du film composite.

La force de délaminage de la liaison polyéthylène/métal et de la liaison PET/polyéthylène dans le sens longitudinal puis dans le sens transversal a été mesurée sur des éprouvettes de 25mm de largeur préparée de façon à ce que des amorces de 20 mm de chacune des couches constitutives du stratifié soient libres. Ces amorces sont introduites dans les machoires d'un appreil de mesure distantes de 4 cm. Une traction est ensuite exercée sur les amorces avec une vitesse de 300 mm/mn. On a obtenu les résultats suivants :

1) Délaminage dans le sens longitudinal

a) entre métal et polyéthylène :
. force de délaminage : 680 g/25 mm
. pas d'arrachement du métal
b) entre la face PET et le polyéthylène :
. Il n'y a pas eu de délaminage

2) Délaminage dans le sens transversal

a) entre métal et polyéthylène :
. force de délaminage 700 g/25 mm
. pas d'arrachement de métal
b) entre PET et polyéthylène : pas de délaminage.

EXEMPLE 9

On a préparé un film composite de 50 μm d'épaisseur de type B1/A/B1 par coextrusion des matériaux décrits à l'exemple 1 dans les conditions suivantes :

. étirage longitudinal
– taux 3 %
– température 90°C
. étirage transversal
– taux 3 %

– température 120°C
. thermofixation 230°C
. débit ligne principale : 910 kg/h.
. débit lignes satellites : 15 kg/h

Le film obtenu a sensiblement les mêmes propriétés que celui décrit à l'exemple 1. On dépose sur la face tambour de ce film 7 à 8 g/m2 d'une composition d'enduction pour matage comportant un liant polymère en solution dans un mélange de solvants constitués principalement de méthylèthylcétone, et d'acétone et contenant de la silice, puis on sèche le film enduit à 140°C. Le film sec enduit est ensuite maintenu pendant 1 mn à 150°C.

Des échantillons de film enduit de 20 cm de longueur et 4 cm de largeur sont ensuite découpés au centre de la laize et dans le sens de la longueur et soumis aux tests de détermination de l'adhérence de l'enduit au support à l'aide du ruban adhésif SCOTCH 396.

Les résultats ont été les suivants :

Note : 9
Force de délaminage : 729 g/cm

EXEMPLES 10 à 11

On a répété l'exemple 9 en faisant varier les conditions de filmature, toutes autres conditions étant par ailleurs identiques. Les conditions de filmature et les résultats des mesures d'adhésion sont consignées dans le tableau ci-après.

| EX. | ET-L (1) | | ET-TR (2) | | TEMP. TH.F.(3) °C | NOTE | F en g/cm |
|---|---|---|---|---|---|---|---|
| | TAUX % | TEMP.°C | TAUX | TEMP.°C | | | |
| 10(4) | 3 | 130 | 3,4 | 120 | 170 | 9 | 630 |
| 11 | 3 | 130 | 3,4 | 110 | 230 | 9 | 1041 |

(1) étirage longitudinal
(2) étirage transversal
(3) température de thermofixation
(4) dans cet essai le film enduit n'a pas été maintenu à 150°C pendant 1 mn après sèchage.

EXEMPLES 12 à 14

On a répété l'exemple 9 en remplaçant le copolymère B1 par le copolymère B4 de l'exemple 4 pour préparer un film composite de 50 μm d'épaisseur de type B4/A/B4.

Les conditions de filmatures et les résultats des tests d'appréciation de l'adhérence sont consignés dans le tableau suivant :

| EX. | ET-L | | ET-T | | TEMP. TH.F. °C | NOTE | F en g/cm |
|---|---|---|---|---|---|---|---|
| | TAUX % | TEMP.°C | TAUX | TEMP.°C | | | |
| 12(1) | 3,4 | 130 | 3 | 120 | 170 | 10 | 909 |
| 13 | 3,4 | 90 | 3 | 120 | 230 | 8 | 791 |
| 14 | 3 | 130 | 3,4 | 110 | 230 | 10 | 805 |

(1) dans cet essai le film enduit n'a pas été maintenu à 150°C pendant 1 mn.

## Revendications

1. Films polyester composites orientés coextrudés, à adhérence améliorée vis-à-vis de revêtements finals d'application, constitués par un film support (A) d'un polyester semi-cristallin, comportant sur au moins une de ses faces une couche contigüe d'un revêtement primaire d'adhérence (B) à base d'un copolyester à groupes oxysulfonyles constitué par une pluralité de motifs récurrents dérivés d'acides dicarboxyliques aromatiques, d'acides dicarboxyliques aliphatiques et de glycols, caractérisés en ce que le copolyester à groupes oxysulfonyles constituant la couche (B) comporte pour 100 moles de motifs d'acide dicarboxylique :

a) de 78 à 93 moles de motifs téréphtalates ;

b) de 2 à 5 moles de motifs dérivés d'un diacide aromatique à groupe(s) oxysulfonyle(s) ;

c) de 5 à 17 moles de motifs dérivés d'au moins un acide alcanedicarboxylique comportant de 4 à 15 atomes de carbone et moins de 6 % en poids de motifs dérivés de polyoxyalkylènediols.

2. Films polyester composites orientés coextrudés à adhérence améliorée vis-à-vis des revêtements finals d'application, selon la revendication 1, caractérisés en ce que le copolyester constituant la couche (B) présente une pluralité de groupes oxysulfonyles de formule générale :

$$-(SO_3)_nM \quad (I)$$

dans laquelle :

– n est égal à 1 ou 2

– M représente un atome d'hydrogène, un métal alcalin, alcalinoterreux, un cation ammonium, un cation ammonium quaternaire

3. Films polyester composites orientés coextrudés à adhérence améliorée vis-à-vis des revêtements finals d'application selon l'une quelconque des revendications 1 à 2, caractérisés en ce que le copolyester sulfoné constituant la couche (B) présente une pluralité de motifs dérivés de diacides aromatiques ou leurs dérivés de formule :

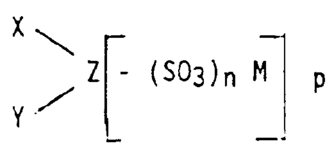

(II)

– n est égal à 1 ou 2

– M représente un atome d'hydrogène, un métal alcalin, un métal alcalino-terreux, un cation ammonium, un cation ammonium quaternaire ;

– Z est un radical aromatique polyvalent ;

– X et Y sont des radicaux hydroxycarbonyle ou dérivés : esters d'alcools aliphatiques inférieurs ou halogénures d'acides ;

– p est un nombre entier égal à 1 ou 2.

4. Films polyester composites orientés coextrudés à adhérence améliorée vis-à-vis des revêtements finals d'application selon la revendication 3, caractérisés en ce que le copolyester sulfoné constituant la couche (B) présente une pluralité de motifs dérivés des acides hydroxysulfonylisophtaliques ou de leurs sels alcalins, alcalino-terreux ou d'ammonium.

5. Films polyester composites orientés coextrudés à adhérence améliorée vis-à-vis des revêtements finals d'application selon l'une quelconque des revendications 1 à 4, caractérisés en ce que le copolyester sulfoné constituant la couche (B) comporte une pluralité de motifs dérivés de l'acide hydroxysulfonyl-5 isophtalique et de ses sels alcalins alcalino-terreux ou d'ammonium.

6. Films polyester composites orientés coextrudés à adhérence améliorée vis-à-vis des revêtements finals d'application selon l'une quelconque des revendications 1 à 5, caractérisés en ce que le copolyester sulfoné constituant la couche (B) comporte une pluralité de motifs recurrents dérivés d'acides alcanedioïques pris dans le groupe formé par les acides succinique, adipique, sébacique, azélaïque, glutarique, subérique.

7. Films polyester composites orientés coextrudés à adhérence améliorée vis-à-vis des revêtements finals d'application selon l'une quelconque des revendications 1 à 6, caractérisés en ce que le copolyester sulfoné constituant la couche (B) présente une pluralité de motifs dérivés de diols aliphatiques saturés comportant de 2 à 4 atomes de carbone.

8. Films polyester composites orientés coextrudés à adhérence améliorée vis-à-vis des revêtements finals d'application selon l'une quelconque des revendications 1 à 7, caractérisés en ce que le polyester semi-cristallin constituant la couche (A) est un polytérèphtalate d'alkylèneglycol ou un copolyester comportant au moins 80 % en moles de motifs récurrents térèphtalates.

9. Films polyester composites orientés coextrudés à adhérence améliorée vis-à-vis des revêtements finals d'application selon l'une quelconque des revendications 1 à 8, caractérisés en ce que leur épaisseur totale est comprise dans un intervalle de 5 à 300 micromètres et l'épaisseur de la (ou des) couches (B) dans un intervalle de 0,1 à 5 micromètres.

10. Procédé d'obtention de films polyester composites orientés à adhérence améliorée vis-à-vis des revêtements finals d'application selon l'une quelconque des revendications 1 à 9 caractérisé en ce que l'on procède à la coextrusion à travers une filière à fente d'un flux (A) d'un polyester cristallisable et d'au moins un flux (B) d'un copolyester à groupes oxysulfonyles comportant pour 100 moles de motifs récurrents dérivés d'acides dicarboxyliques :

a) de 78 à 93 moles de motifs téréphtalates

b) de 2 à 5 moles de motifs dérivés d'un diacide aromatique à groupe (s) oxysulfonyle (s) ;

c) de 5 à 17 moles de motifs dérivés d'au moins un acide alcanedicarboxylique comportant de 4 à 15 atomes de carbone ; sous forme d'un film composite amorphe comportant une couche (A) de polyester amorphe cristallisable et au moins une couche (B) de copolyester sulfoné, puis procède au refroidissement, à l'étirage et à la thermofixation du film composite résultant de la coextrusion.

11. Films polyester composites complexes comprenant a) un film polyester composite orienté coextrudé constitué par un film support (A) d'un polyester semi-cristallin comportant sur au moins une de ses faces une couche contigüe d'un revêtement primaire d'adhérence (B) à base d'un copolyester à groupes oxysulfonyles présentant une pluralité de motifs récurrents dérivés d'acides dicarboxyliques aromatiques, d'acides alcanedioïques et de glycols, et b) un revêtement final d'application déposé sur au moins une des couches du primaire d'adhérence (B), caractérisés en ce que ladite couche (B) est constituée par un copolyester à groupes oxysulfonyles selon l'une quelconque des revendications 1 à 9.

12. Films polyester composites complexes selon la revendication 11 caractérisés en ce que le revêtement final d'application est un enduit de matage.

13. Films polyester composites complexes selon la revendication 12 caractérisés en ce que l'enduit de matage comporte un liant d'alcool polyvinylique réticulé contenant de la silice.

14. Films polyester composites complexes selon la revendication 12 caractérisés en ce que l'enduit de matage comporte un liant d'acétopropionate de cellulose contenant de la silice.

15. Films polyester composites complexes selon la revendication 11 caractérisés en ce que le revêtement final d'application est constitué par une couche métallique.

16. Films polyester composites complexes selon la revendication 15 caractérisés en ce que le métal est l'aluminium.

## Claims

1. Coextruded oriented composite polyester films, with improved adhesion to final application coatings,

consisting of a base film (A) of a semicrystalline polyester, comprising on at least one of its faces an adjoining layer of an adhesion primer coating (B) based on a copolyester containing oxysulphonyl groups, consisting of a plurality of repeat units derived from aromatic dicarboxylic acids, aliphatic dicarboxylic acids and glycols, which are characterised in that the copolyester containing oxysulphonyl groups forming the layer (B) contains, per 100 moles of dicarboxylic acid units:

a) from 78 to 93 moles of terephthalate units;

b) from 2 to 5 moles of units derived from an aromatic diacid containing oxysulphonyl group(s); and

c) from 5 to 17 moles of units derived from at least one alkanedicarboxylic acid containing from 4 to 15 carbon atoms and less than 6% by weight of units derived from polyoxyalkylene diols.

2. Coextruded oriented composite polyester films with improved adhesion to final application coatings, according to claim 1, characterised in that the copolyester forming the layer (B) contains a plurality of oxysulphonyl groups of general formula:

$$(-SO_3)_nM \qquad (I)$$

in which:

– n is equal to 1 or 2, and

– M denotes a hydrogen atom, an alkali or alkaline-earth metal, an ammonium cation or a quaternary ammonium cation.

3. Coextruded oriented composite polyester films with improved adhesion to final application coatings, according to either of claims 1 and 2, characterised in that the sulphonated copolyester forming the layer (B) contains a plurality of units derived from aromatic diacids or their derivatives of formula:

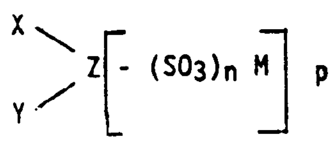

(II)

in which:

– n is equal to 1 or 2,

– M denotes a hydrogen atom, an alkali metal, an alkaline-earth metal, an ammonium cation or a quaternary ammonium cation,

– Z is a polyvalent aromatic radical,

– X and Y are hydroxycarbonyl radicals or derivatives: esters of lower aliphatic alcohols or acid halides, and

– p is an integer equal to 1 or 2.

4. Coextruded oriented composite polyester films with improved adhesion to final application coatings, according to claim 3, characterised in that the sulphonated copolyester forming the layer (B) contains a plurality of units derived from hydroxysulphonylisophthalic acids or from their alkali or alkaline-earth metal or ammonium salts.

5. Coextruded oriented composite polyester films with improved adhesion to final application coatings, according to any one of claims 1 to 4, characterised in that the sulphonated copolyester forming the layer (B) comprises a plurality of units derived from 5-hydroxysulphonylisophthalic acid and from its alkali or alkaline-earth metal or ammonium salts.

6. Coextruded oriented composite polyester films with improved adhesion to final application coatings, according to any one of claims 1 to 5, characterised in that the sulphonated copolyester forming the layer (B) comprises a plurality of repeat units derived from alkanedioic acids taken from the group made up of succinic, adipic, sebacic, azelaic, glutaric and suberic acids.

7. Coextruded oriented composite polyester films with improved adhesion to final application coatings, according to any one of claims 1 to 6, characterised in that the sulphonated copolyester forming the layer (B) contains a plurality of units derived from saturated aliphatic diols containing from 2 to 4 carbon atoms.

8. Coextruded oriented composite polyester films with improved adhesion to final application coatings, according to any one of claims 1 to 7, characterised in that the semicrystalline polyester forming the layer (A) is a polyalkylene terephthalate or a copolyester comprising at least 80 mol% of terephthalate repeat units.

9. Coextruded oriented composite polyester films with improved adhesion to final application coatings, according to any one of claims 1 to 8, characterised in that their total thickness lies within a range from 5 to 300 micrometres and the thickness of the layer(s) (B) within a range from 0.1 to 5 micrometres.

10. Process for obtaining oriented composite polyester films with improved adhesion to final application coatings, according to any one of claims 1 to 9, characterised by performing the coextrusion through a slit die

of a stream (A) of a crystallisable polyester and of at least one stream (B) of a copolyester containing oxysulphonyl groups containing, per 100 moles of repeat units derived from dicarboxylic acids:

a) from 78 to 93 moles of terephthalate units;

b) from 2 to 5 moles of units derived from an aromatic diacid containing oxysulphonyl group(s); and

c) from 5 to 17 moles of units derived from at least one alkanedicarboxylic acid containing from 4 to 15 carbon atoms,

in the form of an amorphous composite film comprising a layer (A) of crystallisable amorphous polyester and at least one layer (B) of sulphonated copolyester, and then performing the cooling, the drawing and the heat-setting of the composite film resulting from the coextrusion.

11. Complex composite polyester films comprising a) a coextruded oriented composite polyester film consisting of a base film (A) of a semicrystalline polyester comprising on at least one of its faces an adjoining layer of an adhesion primer coating (B) based on a copolyester containing oxysulphonyl groups containing a plurality of repeat units derived from aromatic dicarboxylic acids, from alkanedioic acids and from glycols, and b) a final application coating deposited onto at least one of the layers of the adhesion primer (B), which are characterised in that the said layer (B) consists of a copolyester containing oxysulphonyl groups according to any one of claims 1 to 9.

12. Complex composite polyester films according to claim 11, characterised in that the final application coating is a matting coating.

13. Complex composite polyester films according to claim 12, characterised in that the matting coating comprises a crosslinked polyvinyl alcohol binder containing silica.

14. Complex composite polyester films according to claim 12, characterised in that the matting coating comprises a cellulose acetopropionate binder containing silica.

15. Complex composite polyester films according to claim 11, characterised in that the final application coating consists of a metal layer.

16. Complex composite polyester films according to claim 15, characterised in that the metal is aluminium.

## Patentansprüche

1. Orientierte coextrudierte Polyester-Verbundfilme mit verbessertem Haftvermögen gegenüber Anwendungs-Endüberzügen, bestehend aus einem Trägerfilm (A) eines halbkristallinen Polyesters, der auf wenigstens einer seiner Flächen eine benachbarte Schicht eines Haftgrundüberzugs (B) trägt auf Basis eines Copolyesters mit Oxysulfonylgruppen, bestehend aus einer Vielzahl von wiederkehrenden Einheiten abgeleitet von aromatischen Dicarbonsäuren, aliphatischen Dicarbonsäuren und Glykolen, dadurch gekennzeichnet, daß der Copolyester mit Oxysulfonylgruppen, welcher die Schicht (B) bildet, für 100 Mol der Dicarbonsäuregruppen trägt:

(a) von 78 bis 93 Mol Terephthalatgruppen;

(b) von 2 bis 5 Mol Gruppen abgeleitet von einer aromatischen Disäure mit Oxysulfonylgruppe(n);

(c) von 5 bis 17 Mol Gruppierungen abgeleitet von wenigstens einer Alkandicarbonsäure mit 4 bis 15 Kohlenstoffatomen und weniger als 6 Gew.-% Gruppierungen abgeleitet von Polyoxyalkylendiolen.

2. Orientierte coextrudierte Polyester-Verbundfilme mit verbessertem Haftvermögen gegenüber Anwendungs-Endüberzügen gemäß Anspruch 1, dadurch gekennzeichnet, daß der Copolyester, welcher die Schicht (B) bildet, eine Vielzahl von Oxysulfonylgruppen der allgemeinen Formel (I)

$$-(SO_2)_nM \qquad (I)$$

aufweist, worin:

– n gleich 1 oder 2 ist

– M ein Wasserstoffatom, ein Alkalimetall, Erdalkalimetall, ein Ammoniumkation, ein quaternäres Ammoniumkation darstellt.

3. Orientierte coextrudierte Polyester-Verbundfilme mit verbessertem Haftvermögen gegenüber Anwendungs-Endüberzügen gemäß einem der Ansprüche 1 bis 2, dadurch gekennzeichnet, daß der sulfonierte Copolyester, welcher die Schicht (B) bildet, eine Vielzahl von Gruppen aufweist, abgeleitet von aromatischen Disäuren oder deren Derivaten der Formel (II)

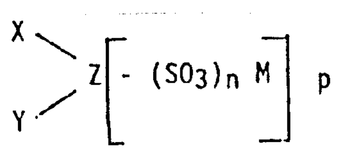

(II)

worin:

- n gleich 1 oder 2 ist
- M ein Wasserstoffatom, ein Alkalimetall, ein Erdalkalimetall, ein Ammoniumkation, ein quaternäres Ammoniumkation darstellt;
- Z ein mehrwertiger aromatischer Rest ist;
- X und Y Hydroxycarbonylreste oder Derivate sind: Ester niederer aliphatischer Alkohole oder Säurehalogenide;
- p eine ganze Zahl gleich 1 oder 2 ist.

4. Orientierte coextrudierte Polyester-Verbundfilme mit verbessertem Haftvermögen gegenüber Anwendungs-Endüberzügen gemäß Anspruch 3, dadurch gekennzeichnet, daß der sulfonierte Copolyester, welcher die Schicht (B) bildet, eine Vielzahl von Gruppen aufweist, die von Hydroxysulfonylisophthalsäuren oder deren Alkali-, Erdalkali- oder Ammoniumsalzen abgeleitet sind.

5. Orientierte coextrudierte Polyester-Verbundfilme mit verbessertem Haftvermögen gegenüber Anwendungs-Endüberzügen gemäß einem der Ansprüche 1 bis 4, dadurch gekennzeichnet, daß der sulfonierte Copolyester, welcher die Schicht (B) bildet, eine Vielzahl von Gruppen trägt, die von der 5-Hydroxysulfonylisophthalsäure und deren Alkali-, Erdalki- oder Ammoniumsalzen abgeleitet sind.

6. Orientierte coextrudierte Polyester-Verbundfilme mit verbessertem Haftvermögen gegenüber Anwendungs-Endüberzügen gemäß einem der Ansprüche 1 bis 5, dadurch gekennzeichnet, daß der sulfonierte Copolyester, welcher die Schicht (B) bildet, eine Vielzahl von wiederkehrenden Gruppen trägt, welche von Alkandisäuren abgeleitet sind, genommen aus der Gruppen gebildet durch Bernsteinsäure, Adipinsäure, Sebacinsäure, Azelainsäure, Glutarsäure, Suberinsäure.

7. Orientierte coextrudierte Polyester-Verbundfilme mit verbessertem Haftvermögen gegenüber Anwendungs-Endüberzügen gemäß einem der Ansprüche 1 bis 6, dadurch gekennzeichnet, daß der sulfonierte Copolyester, welcher die Schicht (B) bildet, eine Vielzahl von Gruppen aufweist, die von gesättigten aliphatischen Diolen mit 2 bis 4 Kohlenstoffatomen abgeleitet sind.

8. Orientierte coextrudierte Polyester-Verbundfilme mit verbessertem Haftvermögen gegenüber Anwendungs-Endüberzügen gemäß einem der Ansprüche 1 bis 7, dadurch gekennzeichnet, daß der halbkristalline Polyester, welcher die Schicht (A) bildet, ein Polyalkylenglykolterephthalat oder ein Copolyester mit mindestens 80 mol-% wiederkehrenden Terephthalateinheiten ist.

9. Orientierte coextrudierte Polyester-Verbundfilme mit verbessertem Haftvermögen gegenüber Anwendungs-Endüberzügen gemäß einem der Ansprüche 1 bis 8, dadurch gekennzeichnet, daß ihre Gesamtdicke in dem Bereich von 5 bis 300 mikrometer und die Dicke der Schicht (oder der Schichten) (B) in dem Bereich von 0,1 bis 5 mikrometer liegt.

10. Verfahren zur Herstellung von orientierten Polyester-Verbundfilmen mit verbessertem Haftvermögen gegenüber Anwendungs-Endüberzügen gemäß einem der Ansprüche 1 bis 9, dadurch gekennzeichnet, daß man die Coextrusion durchführt durch eine Schlitzspinndüse eines Flusses (A) eines kristallisierbaren Polyesters und mindestens eines Flusses (B) eines Copolyesters mit Oxysulfonylgruppen, der für 100 Mol wiederkehrende Einheiten, abgeleitet von Dicarbonsäuren, enthält:

a) von 78 bis 93 Mol Terephthalatgruppen

b) von 2 bis 5 Mol Gruppen, abgeleitet von einer aromatischen Disäure mit Oxysulfonylgruppe(n);

c) von 5 bis 17 Mol Gruppen, abgeleitet von wenigstens einer Alkandicarbonsäure mit 4 bis 15 Kohlenstoffatomen; in Form eines amorphen Verbundfilms enthaltend eine Schicht (A) von kristallisierbarem amorphem Polyester und mindestens einer Schicht (B) von sulfoniertem Copolyester, daß man dann eine Abkühlung, das Verstrecken und die Thermofixierung des von der Coextrusion sich ergebenden Verbundfilms durchführt.

11. Komplexe Polyester-Verbundfilme, umfassend a) einen orientierten coextrudierten Polyester-Verbundfilm, bestehend aus einem Trägerfilm (A) eines halbkristallinen Polyesters, der an wenigstens einer seiner Flächen eine angrenzende Schicht eines Haftgrundüberzugs (B) trägt auf Basis eines Copolyesters mit Oxysulfonylgruppen, der eine Vielzahl von wiederkehrenden Einheiten, abgeleitet von aromatischen Dicarbonsäure, Alkandisäuren und Glykolen aufweist, und b) einen Anwendungs-Endüberzug, der auf wenigstens einer der Haftgrundschichten (B) abgesetzt ist, dadurch gekennzeichnet, daß die Schicht (B) aus einem Copolyester mit Oxysulfonylgruppen gemäß einem der Ansprüche 1 bis 9 besteht.

12. Komplexe Polyester-Verbundfilme gemäß Anspruch 11, dadurch gekennzeichnet, daß der Anwendungs-Endüberzug ein Mattierungsüberzug ist.

13. Komplexe Polyester-Verbundfilme gemäß Anspruch 12, dadurch gekennzeichnet, daß der Mattierungsüberzug einen Binder aus vernetztem Polyvinylalkohol, enthaltend Siliciumdioxid, aufweist.

14. Komplexe Polyester-Verbundfilme gemäß Anspruch 12, dadurch gekennzeichnet, daß der Mattierungsüberzug einen Binder von Celluloseacetopropionat, enthaltend Siliciumdioxid, aufweist.

15. Komplexe Polyester-Verbundfilme gemäß Anspruch 11, dadurch gekennzeichnet, daß der Anwendungs-Endüberzug aus einer Metallschicht besteht.

16. Komplexe Polyester-Verbundfilme gemäß Anspruch 15, dadurch gekennzeichnet, daß das metall Aluminium ist.